# FASCICULE DE BREVET EUROPEEN

(11) **EP 3 110 767 B1**
(45) Date de publication et mention de la délivrance du brevet: **29.08.2018**
(21) Numéro de dépôt: 15711248.3
(22) Date de dépôt: 23.02.2015
(51) Int. Cl.: C03B 23/027, C03B 23/03

(54) **BOMBAGE PAR GRAVITE SUR DOUBLE-SUPPORT**
SCHWERKRAFTBIEGUNG AUF DOPPELHALTERUNG
GRAVITY BENDING ON DUAL MOUNTING

(30) Priorité: 27.02.2014 FR 1451598
(43) Date de publication de la demande: 04.01.2017
(73) Titulaire: Saint-Gobain Glass France, 92400 Courbevoie (FR)
(72) Inventeur: OLIVIER, Thierry, 60150 Thourotte (FR); PARAMBAN, Udayan, 60200 Compiegne (FR)
(74) Mandataire: Saint-Gobain Recherche
(86) Numéro de dépôt international: PCT/FR2015/050434
(87) Numéro de publication internationale: WO 2015/128573

(56) Documents cités:
- JP-A- 2002 241 140
- US-A- 5 167 689
- US-A- 5 660 609
- US-A1- 2011 314 871

## Description

L'invention concerne le bombage par gravité de feuilles de verre sur un support de bombage par gravité comprenant un mécanisme assurant le remplacement d'au moins une partie de la ligne de support de la périphérie de la feuille au cours du bombage.

Le bombage de feuilles de verre par gravité sur un cadre de bombage est bien connu et peut se heurter au problème de la formation simultanée de courbures selon des directions orthogonales entre elles. En effet, le bombage sur un cadre unique peut entraîner la formation d'un contre-bombage se traduisant par la formation d'une courbure inversée dans les coins de la feuille. De tels défauts sont rédhibitoires et se produisent d'autant plus facilement que la forme à donner à la feuille est complexe, c'est-à-dire que les courbures finales en direction orthogonales entre elles sont accentuées. Pour pallier ce problème, le US5167689 propose de réaliser le bombage par gravité sur un dispositif comprenant deux cadres se substituant l'un à l'autre. Selon une variante, les supports latéraux sont substitués au cours du bombage. Le US5660609 enseigne un dispositif de bombage comprenant un premier cadre destiné à supporter la périphérie de la feuille de verre à bomber durant une première étape de bombage, un deuxième cadre se substituant au premier pour supporter la périphérie de la feuille de verre durant la deuxième étape de bombage, et des moyens pour maîtriser à tout moment les forces exercées sur la feuille de verre au cours du passage de celles-ci du premier cadre au deuxième cadre.

Le bombage par gravité va d'autant plus vite que la température de bombage est élevée. Cependant, une plus haute température favorise la formation de marques et de distorsions optiques en périphérie de la feuille bombée suite au contact du verre avec l'outil de bombage. Lorsque le pourtour des feuilles de verre est revêtu d'un émail, les défauts périphériques sont masqués par l'émail. Ainsi, l'émail périphérique recouvre généralement toute la zone périphérique de la feuille de verre ayant été supportée par les deux cadres. Comme ces cadres supportent le verre selon des lignes périphériques se côtoyant, et comme un certain jeu doit exister entre les deux cadres (de l'ordre de 4 à 9 mm), comme de plus un certain espace doit exister entre le bord du verre et le cadre support le plus externe, l'émail recouvre marginalement le verre sur une distance non-négligeable, de l'ordre d'au moins 20mm et même au moins 23mm à partir du bord de la feuille. La présence d'un tel émail noir est habituelle aujourd'hui sur les pare-brise de véhicules routier (automobiles, camions, autocars, etc). Certains constructeurs souhaitent cependant réduire la largeur de l'émail pour des questions de visibilité et d'esthétique, au niveau des montants de ces pare-brises. Ces montants (« pillars » en anglais) sont les structures du véhicule apparaissant sensiblement verticales de l'intérieur dudit véhicule et maintenant le pare-brise sur les côtés. Ils font le lien entre le toit et le reste de la carrosserie du véhicule. Ces montants maintiennent les deux bords latéraux du pare-brise, lesquels sont moins long que les deux bords longitudinaux du pare-brise, ces derniers étant sensiblement horizontaux une fois le pare-brise monté sur le véhicule. En raison de ce dimensionnement, la distance entre les milieux des bords longitudinaux du pare-brise est plus courte que la distance entre les milieux des bords latéraux du pare-brise. Il en est bien entendu de même pour chaque feuille de verre incluse dans le pare-brise. Les pare-brise sont en effet généralement feuilletés et contiennent plusieurs feuilles de verre (généralement deux feuilles de verre) séparées par des feuilles en matériau polymère comme le polyvinyle de butyral, dit « PVB ».

Quand on parle du milieu d'un bord d'une feuille de verre il s'agit du point situé à la même distance développée de chaque extrémité du bord en suivant le bord de la feuille et les courbures du verre. Il s'agit donc d'une distance développée. Quand on parle du milieu d'un support il s'agit du point situé à la même distance développée de chaque extrémité du support en suivant le profil du support vu de dessus et ses courbures. Il s'agit donc d'une distance développée.

La vitesse du bombage par gravité dépend également de la taille de la feuille de verre. En effet, plus la feuille est grande, plus le poids du verre est important et fait son effet, et plus l'obtention d'une flèche donnée est rapide. Le bombage entre deux supports éloignés est donc plus rapide qu'entre deux supports proches. C'est pourquoi la formation du bombage latéral, c'est-à-dire des courbures d'un bord longitudinal à l'autre est plus longue que la formation du bombage longitudinal, c'est-à-dire des courbures d'un bord latéral à l'autre. L'utilisation de deux supports successifs pour porter et bomber un bord de la feuille de verre implique nécessairement une perte de temps. En effet, une fois que toute la bordure du verre touche le premier support, le verre reste un certain temps à son contact avant que le second support, dont la courbure est plus accentuée, ne vienne le remplacer. Ce temps d'attente sur le premier support à la plus faible courbure est une perte de temps. Selon l'art antérieur, lorsqu'un dispositif à deux supports successifs est utilisé, selon un mode de réalisation les bords longitudinaux du verre peuvent être portés par la même paire de supports du début à la fin du bombage. Dans ce cas, les bords latéraux de la feuille sont cependant supportés successivement par deux paires de supports différents, la paire intervenant à la fin présentant les courbures finales souhaitées pour le verre. On a maintenant trouvé qu'il était possible et avantageux d'utiliser une seule paire de supports latéraux pour supporter les bords latéraux de la feuille de verre alors que deux supports successifs viennent supporter ses bords longitudinaux. En effet, dans ce cas, les supports latéraux ont la forme finale souhaitée pour la feuille de verre et le bombage de ces deux bords latéraux n'est pas interrompu en cours de bombage par un support ébaucheur ayant une forme intermédiaire à la forme finale. Ceci est d'autant plus avantageux que le bombage latéral, c'est-à-dire la formation des courbures d'un bord longitudinal à l'autre, est le plus difficile en raison de la plus faible distance entre les bords longitudinaux. Au cours du processus de bombage, alors que les bords latéraux de la feuille de verre ne viennent au contact qu'avec une seule paire de supports latéraux ayant la forme finale souhaitée des bords latéraux de la feuille, des supports longitudinaux finisseurs ayant la forme finale souhaitée des bords longitudinaux de la feuille viennent remplacer au cours du bombage des supports longitudinaux ébaucheur ayant une forme intermédiaire et ayant donc une courbure moins accentuées que celle des supports longitudinaux finisseurs.

Les supports dont il est question dans la présente demande sont souvent appelés par l'homme du métier « squelette », ce qui signifie qu'ils sont constitués d'une bande continue de métal dont une tranche est orientée vers le haut et sert de piste de moulage et de support du verre. Cette tranche est généralement moins large que la bande de métal n'est haute. En tant que surface de contact avec le verre, cette tranche a généralement une largeur comprise dans le domaine allant de 2 à 10 mm. Ces supports ont vocation à supporter le bord du verre, c'est-à-dire la zone périphérique d'une surface principale d'une feuille de verre, le contact support/verre ne venant jamais à l'intérieur de ladite surface à plus de 23 mm du bord de la feuille de verre. Une piste de moulage est une surface destinée à venir en contact avec le verre pour lui donner une forme. Dans le cadre de la présente invention, on peut utiliser simplement le terme « piste » pour « piste de moulage » par simplification. Dans la pratique, on recouvre toujours un support de bombage par un tissu réfractaire bien connu de l'homme du métier pour atténuer le marquage du verre par le support, de sorte que la piste de moulage venant en contact avec le verre est en fait constituée par ce tissu réfractaire. Par soucis de simplification rédactionnelle, on ne parle plus de ce tissu en surface des supports, étant entendu qu'il est généralement présent.

L'invention concerne un dispositif de bombage d'une feuille de verre par gravité comprenant un ébaucheur longitudinal comprenant deux supports ébaucheurs longitudinaux, et un cadre finisseur comprenant deux supports finisseurs latéraux et deux supports finisseurs longitudinaux, lesdits supports formant des pistes de moulage, la distance entre les milieux des supports finisseurs longitudinaux étant plus courte que la distance entre les milieux des supports finisseurs latéraux, l'ébaucheur ou le cadre finisseur pouvant être déplacé verticalement relativement l'un par rapport à l'autre au cours du bombage pour passer d'une configuration de bombage ébauche à une configuration de bombage final, en configuration de bombage ébauche, les pistes de moulage des supports ébaucheurs longitudinaux étant plus hautes que les pistes de moulage des supports finisseurs longitudinaux, et en configuration de bombage final, les pistes de moulage des supports finisseurs longitudinaux étant plus hautes que les pistes de moulage des supports ébaucheurs longitudinaux, les pistes de moulage des supports finisseurs latéraux étant les seules pistes de moulage sous les bords latéraux du verre en configuration de bombage ébaucheur et en configuration de bombage final.

Les pistes de moulage des supports finisseurs latéraux sont donc les pistes de moulage de support les plus hautes et aptes à recevoir le verre sous les bords latéraux du verre à la fois en configuration de bombage ébaucheur et en configuration de bombage final.

Lorsque l'ébaucheur est en position haute, la piste des supports ébaucheurs longitudinaux est entièrement au-dessus de la piste des supports finisseurs longitudinaux. Dans cette configuration, le verre touche la piste des supports ébaucheurs longitudinaux et ne touche pas la piste des supports finisseurs longitudinaux. Lors de l'étape de bombage ébauche pendant laquelle le verre est en contact avec la paire de supports ébaucheur longitudinaux, les bords latéraux du verre sont directement au-dessus de la paire de supports finisseurs latéraux, sans qu'aucune autre pièce ne soit plus près du verre que ces supports finisseurs latéraux. Généralement, il se crée au moins un contact partiel entre le verre et les supports finisseurs latéraux pendant que les bords longitudinaux sont encore en contact avec les supports ébaucheurs longitudinaux.

Pendant tout le processus de bombage, le milieu des bords latéraux de la feuille ne touchent que les supports finisseurs latéraux au cours du bombage. Il en est généralement de même avec l'intégralité des bords latéraux de la feuille qui ne touchent généralement que les supports finisseurs latéraux au cours du bombage.

Lorsque l'ébaucheur est en position basse, la ligne de contact périphérique de la feuille de verre est constituée par les deux supports finisseurs longitudinaux et les deux supports finisseurs latéraux.

Le mouvement de l'ébaucheur et/ou du cadre finisseur est un mouvement vertical relatif de l'un par rapport à l'autre, étant entendu que seul l'ébaucheur peut être mobile ou que seul le cadre finisseur peut être mobile, ou que l'ébaucheur et le cadre finisseur peuvent être tous deux mobiles. Le temps gagné du fait de l'utilisation selon l'invention d'une seule paire de supports latéraux finisseurs peut même être mis à profit pour baisser la température de bombage au niveau des bords latéraux de la feuille de verre, en particulier au milieu de chacun de ces bords latéraux. Ainsi, grâce à l'invention, la température au milieu de chacun des bords latéraux de la feuille de verre peut rester inférieure à 615°C et même inférieure à 610°C. Le même bombage des bords latéraux avec l'utilisation successive de deux supports latéraux serait obtenu dans la même durée avec une température de plus de 620°C. Cette possibilité de baisser la température permet par ailleurs de réduire l'importance des défauts dus au contact avec le support, au niveau des bords latéraux de la feuille de verre.

De préférence, l'ébaucheur se trouve à l'intérieur du cadre finisseur vue de dessus, de sorte que le cadre finisseur porte la feuille de verre plus près de son bord que l'ébaucheur. De la sorte, l'ébaucheur est circonscrit par le cadre finisseur vu de dessus. Généralement, il reste de 4 à 10 mm de verre non supporté en périphérie de la feuille en fin de bombage sur le cadre finisseur. Il s'agit là de la distance entre le bord du verre et le cadre finisseur. Selon une variante, l'ébaucheur peut également se trouver à l'extérieur du cadre finisseur.

Le finisseur ne comprend de préférence aucune articulation. Il s'agit donc ainsi préférentiellement d'une bande de métal totalement continue sur tout son périmètre sans aucune ouverture ou division en plusieurs parties. Il n'y a ainsi aucun risque que différentes partie du finisseur se raccordent mal quand on passe de l'une à l'autre, constituant par exemple une différence de niveau pouvant occasionner une marque sur le verre. L'existence d'un dispositif d'ajustage pour régler très précisément la position de différentes parties du cadre finisseur est donc inutile.

La feuille de verre subissant le procédé de bombage selon l'invention peut éventuellement subir juste après celui-ci un bombage par pressage comme par exemple décrit dans WO2006072721.

Selon l'invention, une feuille de verre peut être bombée individuellement. Selon l'invention, plusieurs feuilles de verre superposées, généralement deux, peuvent également être bombées de façon simultanée. Le bombage simultané de plusieurs feuilles de verre superposées est avantageux dès lors que ces différentes feuilles sont destinées à être assemblées en un même vitrage feuilleté, notamment du type pare-brise. En effet, les différentes feuilles de verre bombées ainsi simultanément, présentent des formes idéalement identiques, ce qui est favorable pour la qualité de l'assemblage. L'assemblage pour faire un vitrage feuilleté fait appel aux techniques connues de l'homme du métier.

L'invention est particulièrement adaptée au bombage de feuilles de verre ayant une profondeur de bombage latéral compris entre 5 et 20 mm et généralement entre 8 et 17 mm, ces valeurs étant obtenues en fin de bombage selon le procédé de l'invention. La profondeur de bombage latérale est la plus grande longueur de segment entre le bord latéral du vitrage et la droite reliant les deux extrémités du bord latéral considéré, ledit segment étant orthogonal à ladite droite.

L'invention est particulièrement adaptée au bombage de feuilles de verre ayant une profondeur de bombage longitudinal compris entre 40 et 150 mm, ces valeurs étant obtenues en fin de bombage selon le procédé de l'invention. La profondeur de bombage longitudinal est la plus grande longueur de segment entre le bord longitudinale et la droite reliant les deux extrémités du bord longitudinal considéré.

L'invention est particulièrement adaptée au bombage de feuilles de verre dont le rapport de la distance développée entre les milieux des bords latéraux de la feuille sur la distance développée entre les milieux des bords longitudinaux de la feuille va de 1,3 à 2.

L'invention est particulièrement adaptée au bombage de feuilles de verre combinant à la fois une profondeur de bombage latéral compris entre 5 et 20 mm, une profondeur de bombage longitudinal compris entre 40 et 150 mm, et un rapport entre la distance développée entre les milieux des bords latéraux de la feuille sur la distance développée entre les milieux des bords longitudinaux de la feuille va de 1,3 à 2.

L'invention est particulièrement utile lorsque la profondeur de bombage longitudinal est importante, et que la profondeur de bombage latéral est modérée, conformément aux valeurs de profondeur de bombage qui viennent d'être mentionnées. En effet, lorsque le bombage longitudinal est fort, les deux bords latéraux du verre se rapprochent sensiblement au cours de ce bombage. Si les bords latéraux du verre touchent prématurément des supports latéraux, alors, le verre va glisser sur le support latéral sur une distance importante au cours du bombage longitudinal, ce qui risque d'accroître la marque produite sur le verre. C'est pourquoi il est préférable, dans la mesure du possible, que les bords latéraux du verre touchent les supports finisseurs latéraux le plus tard possible.

L'invention concerne également un procédé de bombage d'une feuille de verre par gravité par le dispositif selon l'invention. Selon ce procédé, le bombage d'une feuille de verre par gravité à lieu à une température de déformation sur le dispositif selon l'invention. La feuille de verre comprend deux bords latéraux et deux bords longitudinaux, la distance entre les milieux des bords longitudinaux de la feuille étant plus courte que la distance entre les milieux des bords latéraux de la feuille. La feuille est d'abord supportée par le dispositif en configuration de bombage ébauche pour subir un bombage ébauche, les bords longitudinaux de la feuille étant bombés par contact sur les pistes de moulage des supports ébaucheurs longitudinaux, puis le dispositif passe en configuration de bombage final pour faire subir à la feuille un bombage final, la feuille étant alors bombée au contact des pistes de moulage des supports finisseurs longitudinaux et au contact des pistes de moulage des supports finisseurs latéraux.

Après avoir été portée à une température de déformation, la feuille de verre est bombée par gravité et au contact des supports ébaucheurs longitudinaux. Un contact, éventuellement partiel, peut être réalisé au cours de cette première étape avec les supports finisseurs latéraux. Ensuite, le cadre ébaucheur est escamoté vers le bas selon un mouvement relatif avec le cadre finisseur, afin que les supports ébaucheurs longitudinaux se trouvent sous les supports finisseurs longitudinaux, et la feuille de verre est bombée sur les supports finisseurs latéraux et les supports finisseurs longitudinaux du cadre finisseur. Généralement, la feuille de verre est posée à température ambiante sur le dispositif selon l'invention, ledit dispositif étant ensuite convoyé dans un four pour que la feuille de verre atteigne une température de déformation, généralement supérieure à 590°C. Quand on pose la feuille plane à température ambiante sur le dispositif selon l'invention, du fait de sa planéité, la feuille ne le touche qu'en quatre points, sensiblement dans ses coins, ces quatre points appartenant généralement aux supports ébaucheurs longitudinaux. Au cours de la première étape de bombage, dite de bombage ébauche, le verre s'affaisse sous l'effet de son poids et ses bords longitudinaux viennent généralement jusqu'à épouser intégralement les pistes de moulage des supports ébaucheurs longitudinaux. A la fin de cette étape intermédiaire, le contact du verre avec les supports finisseurs latéraux peut n'être que partiel voire même nul. Notamment, les milieux des bords latéraux peuvent ne pas entrer au contact avec les pistes de moulage des supports finisseurs latéraux. Ensuite, lors du passage de la configuration de bombage ébauche à la configuration de bombage final, les supports finisseurs longitudinaux viennent se substituer aux supports ébaucheurs longitudinaux et le bombage se poursuit jusqu'à ce qu'en fin de bombage, les bords de la feuille épousent intégralement les pistes de moulage des supports finisseurs longitudinaux et les pistes de moulage des supports finisseurs latéraux.

Le passage de l'ébaucheur au cadre finisseur est réalisé par des mécanismes connus de l'homme du métier, ledit mécanisme pouvant notamment être progressif, sur le principe de celui décrit dans WO2007077371.

Grâce à l'invention un vitrage bombé, notamment du type pare-brise feuilleté, comprenant une étroite couche d'émail le long de ses bords latéraux, notamment de largeur inférieure à 15mm, notamment au milieu des bords latéraux, peut être réalisé. La couche d'émail selon les bords longitudinaux de ce même vitrage peut être de largeur supérieure à 15mm, voire même supérieure à 20mm. Le dispositif et le procédé selon l'invention ont été conçus spécialement pour la fabrication de ces vitrages. La couche d'émail particulièrement étroite le long des bords latéraux est la conséquence directe de ce que les pistes de moulage des supports finisseurs latéraux sont les seules pistes de moulage sous les bords latéraux du verre en configuration de bombage ébaucheur et en configuration de bombage final.

Dans le cas d'un vitrage feuilleté, l'émail est généralement disposé sur une face de l'une seulement des feuilles devant être assemblées, et de sorte que cette face portant l'émail se trouve à l'intérieur du vitrage feuilleté en contact avec une feuille intercalaire en polymère et ne constitue pas une face externe du vitrage.

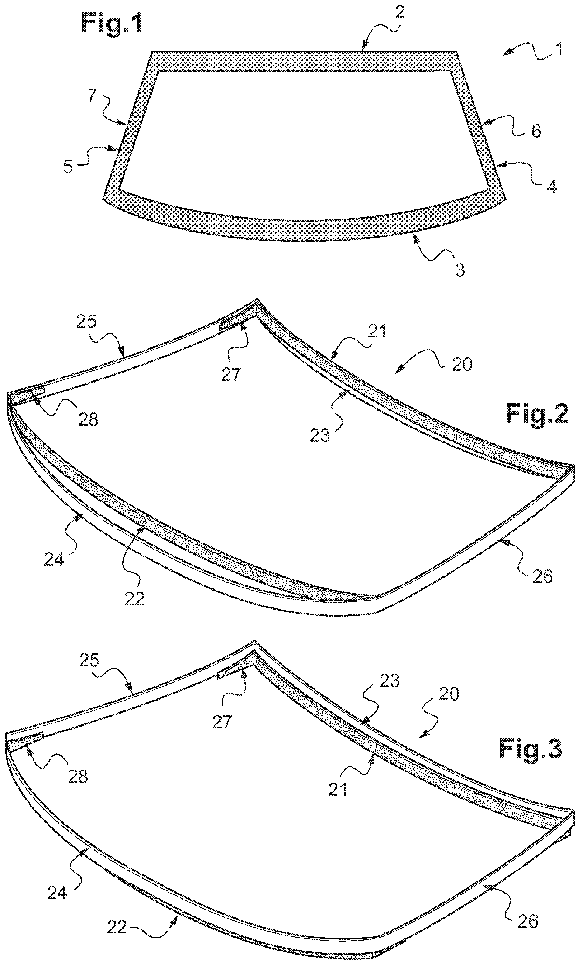

La figure 1 représente un pare-brise 1 de véhicule automobile en verre feuilleté. Il a été bombé par le procédé selon l'invention. Ce vitrage comprend un bord longitudinal haut 2, un bord longitudinal bas 3, et deux bords latéraux 4 et 5. Une couche d'émail noir périphérique opacifie la bordure du vitrage. La largeur de la couche d'émail est réduite (moins de 15 mm) le long des bords latéraux et notamment au niveau des milieux 6 et 7 de ces bords latéraux 4 et 5. La largeur de la couche d'émail est plus importante (plus de 15 mm) le long des bords longitudinaux 2 et 3.

La figure 2 représente un dispositif 20 de bombage selon l'invention. Ce dispositif comprend un ébaucheur constitué de deux supports ébaucheurs longitudinaux 21 et 22 et un cadre finisseur comprenant deux supports finisseurs longitudinaux 23 et 24 et deux supports finisseurs latéraux 25 et 26. Ce dispositif est montré en début de bombage, l'ébaucheur étant en position haute relativement au cadre finisseur. Les pattes 27 et 28 fixées aux extrémités des supports ébaucheurs longitudinaux 21 et 22 et orthogonalement par rapport à eux, sont destinées à donner de la rigidité à ces derniers et ne font pas office de support pour le verre. Deux autres pattes équivalentes existent aux deux autres extrémités non visibles des supports ébaucheurs longitudinaux 21 et 22. Dans la configuration montrée à la figure 2, si l'on bombe une feuille de verre sur le dispositif, après chauffage à sa température de déformation, le verre entre en contact avec la paire de supports ébaucheurs longitudinaux 21 et 22 et le cas échéant avec les deux supports finisseurs latéraux 25 et 26. Généralement, l'ébaucheur est escamoté vers le bas avant que le verre ne touche l'intégralité des supports finisseurs latéraux.

La figure 3 représente le même support 20 de la figure 2, sauf qu'il est en configuration de fin de bombage. L'ébaucheur a ainsi été escamoté vers le bas et le verre repose alors sur les supports finisseurs latéraux et les supports finisseurs longitudinaux 23 et 24.

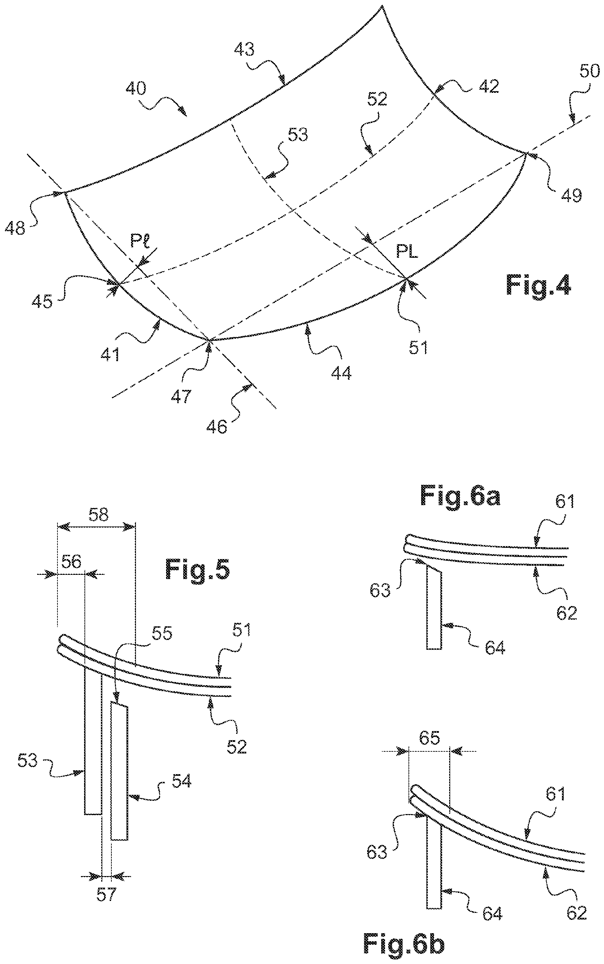

La figure 4 représente ce que l'on entend par profondeur de bombage latéral et profondeur de bombage longitudinal sur un vitrage 40 ayant deux bords latéraux 41 et 42 et deux bords longitudinaux 43 et 44. La profondeur de bombage latérale Pl est la plus grande longueur de segment entre le bord latéral du vitrage et la droite 46 reliant les deux extrémités 47 et 48 du bord latéral considéré, ledit segment étant orthogonal à ladite droite 46. Sur la figure 4, c'est le point 45 qui est le plus éloigné de la droite 46. La profondeur de bombage longitudinal PL est la plus grande longueur de segment entre le bord longitudinale et la droite 50 reliant les deux extrémités 47 et 49 du bord longitudinal considéré, ledit segment étant orthogonal à ladite droite 50. Sur la figure 4, c'est le point 51 qui est le plus éloigné de la droite 50. Le bombage longitudinal correspond à la formation des courbures entre le bord latéral 41 et le bord latéral 42 comme c'est le cas de la courbure 52. Le bombage latéral correspond à la formation des courbures entre le bord longitudinal 43 et le bord longitudinal 44 comme c'est le cas de la courbure 53.

La figure 5 représente deux feuilles de verre superposées 51 et 52 sur le dispositif selon l'invention en position de bombage final et en vision latérale c'est-à-dire que le plan de la figure passe par le milieu des supports longitudinaux. Ces deux feuilles sont destinées à être assemblées dans un vitrage feuilleté. La feuille de verre du dessous est en contact avec la piste de moulage du support finisseur longitudinal 53. Le support ébaucheur longitudinal 54 a été escamoté vers le bas de sorte que sa piste de moulage 55 ne touche plus le verre. Le verre déborde du cadre finisseur de la distance 56 correspondant aux 4 à 10 mm de verre non supportés en périphérie de la feuille en fin de bombage sur le cadre finisseur. La distance 58 est la distance pouvant comprendre la couche d'émail dans le vitrage final afin de recouvrir toute la zone périphérique ayant été en contact avec les supports 53 et 54, lesquels sont séparés l'un de l'autre par un jeu 57.

La figure 6 représente deux feuilles de verre superposées 61 et 62 sur le dispositif selon l'invention en vision longitudinale c'est-à-dire que le plan de la figure passe par le milieu des supports latéraux. En a), les feuilles sont en fin de bombage ébauche et, dans le cas représenté, le verre n'a pas encore touché la piste de moulage au milieu du support latéral 64. En b), les feuilles sont en fin de bombage final et le verre a épousé la piste de moulage 63 du support latéral 64. En a) comme en b), il n'existe aucune autre piste de moulage de support plus proche du verre que celle 63 du support finisseur latéral 64. On peut donc dire que les pistes de moulage des supports finisseurs latéraux sont les pistes de moulage de support les plus hautes sous les milieux des bords latéraux du verre en configuration de bombage ébaucheur et en configuration de bombage final. Du fait de l'utilisation d'un seul support finisseur latéral 64, la couche d'émail peut venir sur une distance 65 à partir du bord latéral du vitrage final, plus petite que la distance d'émail à partir du bord longitudinal du vitrage final (noté 58 sur la figure 5).

## Revendications

1. Dispositif (20) de bombage d'une feuille de verre par gravité comprenant un ébaucheur longitudinal comprenant deux supports ébaucheurs longitudinaux (21,22), et un cadre finisseur comprenant deux supports finisseurs latéraux (25,26) et deux supports finisseurs longitudinaux (23,24), lesdits supports formant des pistes de moulage, la distance entre les milieux des supports finisseurs longitudinaux étant plus courte que la distance entre les milieux des supports finisseurs latéraux, l'ébaucheur ou le cadre finisseur pouvant être déplacé verticalement relativement l'un par rapport à l'autre au cours du bombage pour passer d'une configuration de bombage ébauche à une configuration de bombage final, **caractérisé en ce qu'**en configuration de bombage ébauche, les pistes de moulage des supports ébaucheurs longitudinaux sont plus hautes que les pistes de moulage des supports finisseurs longitudinaux, et **en ce qu'**en configuration de bombage final les pistes de moulage des supports finisseurs longitudinaux sont plus hautes que les pistes de moulage des supports ébaucheurs longitudinaux, et **en ce que** les pistes de moulage des supports finisseurs latéraux sont les seules pistes de moulage sous les bords latéraux du verre en configuration de bombage ébaucheur et en configuration de bombage final.

2. Dispositif selon la revendication précédente, **caractérisé en ce que** l'ébaucheur est circonscrit par le cadre finisseur vu de dessus.

3. Procédé de bombage d'une feuille de verre (40) par gravité à une température de déformation par le dispositif (20) de l'une des revendications précédentes, la feuille de verre comprenant deux bords latéraux (41,42) et deux bords longitudinaux (43,44), la distance entre les milieux des bords longitudinaux de la feuille étant plus courte que la distance entre les milieux des bords latéraux de la feuille, la feuille étant supportée par le dispositif en configuration de bombage ébauche et pour subir un bombage ébauche, les bords longitudinaux de la feuille étant bombés par contact sur les pistes de moulage des supports ébaucheurs longitudinaux (21,22), puis le dispositif passe en configuration de bombage final pour faire subir à la feuille un bombage final, la feuille étant alors bombée au contact des pistes de moulage des supports finisseurs longitudinaux (23,24) et au contact des pistes de moulage des supports finisseurs latéraux (25,26).

4. Procédé selon la revendication précédente, **caractérisé en ce qu'**au cours du bombage ébauche, les bords longitudinaux de la feuille épousent intégralement les pistes de moulage des supports ébaucheurs longitudinaux.

5. Procédé selon l'une des revendications précédentes de procédé, **caractérisé en ce qu'**au cours du bombage ébauche, les bords latéraux de la feuille entrent au moins partiellement en contact avec les pistes de moulage des supports finisseurs latéraux.

6. Procédé selon l'une des revendications précédentes de procédé, **caractérisé en ce qu'**au cours du bombage ébauche, les milieux des bords latéraux de la feuille n'entrent pas en contact avec les pistes de moulage des supports finisseurs latéraux.

7. Procédé selon l'une des revendications précédentes de procédé **caractérisé en ce qu'**à la fin du bombage, les bords de la feuille épousent intégralement les pistes de moulage des supports finisseurs longitudinaux et les pistes de moulage des supports finisseurs latéraux.

8. Procédé selon l'une des revendications précédentes de procédé, **caractérisé en ce que** 4 à 10 mm de verre ne sont pas supportés en périphérie de la feuille en fin de bombage sur le cadre finisseur.

9. Procédé selon l'une des revendications précédentes de procédé, **caractérisé en ce que** la température au milieu de chacun des bords latéraux de la feuille de verre reste inférieure à 615°C et même inférieure à 610°C.

10. Procédé selon l'une des revendications précédentes de procédé, **caractérisé en ce qu'**à la fin du bombage, la profondeur de bombage latéral est comprise entre 5 et 20 mm et généralement entre 8 et 17 mm.

11. Procédé selon l'une des revendications précédentes de procédé, **caractérisé en ce qu'**à la fin du bombage, la profondeur de bombage longitudinal est comprise entre 40 et 150 mm.

12. Procédé selon l'une des revendications précédentes de procédé, **caractérisé en ce que** le rapport entre la distance développée entre les milieux des bords latéraux de la feuille sur la distance développée entre les milieux des bords longitudinaux de la feuille va de 1,3 à 2.

13. Procédé selon l'une des revendications précédentes de procédé, **caractérisé en ce que** plusieurs feuilles de verre superposées, notamment deux, sont bombées simultanément.

14. Procédé de fabrication d'un vitrage bombé (1) comprenant le procédé de bombage de l'une des revendications précédentes de procédé, ledit vitrage comprenant deux bords latéraux (4,5) et deux bords longitudinaux (2,3) et une couche d'émail périphérique, ledit vitrage comprenant un bombage latéral et un bombage longitudinal, la couche d'émail étant de largeur inférieure à 15 mm sur les bords latéraux et supérieure à 15 mm voire même supérieure à 20 mm sur les bords longitudinaux.

15. Procédé selon la revendication précédente, **caractérisé en ce que** le vitrage est feuilleté.

16. Procédé selon l'une des deux revendications précédentes, **caractérisé en ce que** le vitrage est un pare-brise.

## Patentansprüche

1. Vorrichtung (20) zum Biegen einer Glasscheibe durch Schwerkraft, die eine Längsvorform umfasst, die zwei Längsvorformträger (21, 22) und einen Fertigformrahmen, der zwei seitliche Fertigformträger (25, 26) und zwei Längsfertigformträger (23, 24) umfasst, wobei die Träger Formbahnen bilden, wobei der Abstand zwischen den Mitten der Längsfertigformträger kürzer ist als der Abstand zwischen den Mitten der seitlichen Fertigformträger, wobei die Vorform oder der Fertigformrahmen vertikal in Bezug zueinander im Laufe des Biegens verlagert werden können, um von einer Rohlingbiegekonfiguration zu einer Endbiegekonfiguration überzugehen, **dadurch gekennzeichnet, dass** in Rohlingbiegekonfiguration die Formbahnen der Längsvorformträger höher sind als die Formbahnen der Längsfertigformträger, und dass in Endbiegekonfiguration die Formbahnen der Längsfertigformträger höher sind als die Formbahnen der Längsvorformträger, und dass die Formbahnen der seitlichen Fertigformträger die einzigen Formbahnen unter den Seitenrändern des Glases in Rohlingbiegekonfiguration und in Endbiegekonfiguration sind.

2. Vorrichtung nach dem vorhergehenden Anspruch, **dadurch gekennzeichnet, dass** die Vorform von dem Fertigformrahmen von oben gesehen eingegrenzt ist.

3. Biegeverfahren einer Glasscheibe (40) durch Schwerkraft bei einer Verformungstemperatur durch die Vorrichtung (20) nach einem der vorhergehenden Ansprüche, wobei die Glasscheibe zwei Seitenränder (41, 42) und zwei Längsränder (43, 44) umfasst, wobei der Abstand zwischen den Mitten der Längsränder der Scheibe kürzer ist als der Abstand zwischen den Mitten der Seitenränder der Scheibe, wobei die Scheibe von der Vorrichtung in Rohlingbiegekonfiguration getragen wird, und um ein Rohlingbiegen zu erfahren, wobei die Längsränder der Scheibe durch Berührung auf den Formbahnen der Längsvorformträger (21, 22) gebogen werden, die Vorrichtung dann in Endbiegekonfiguration übergeht, um die Scheibe einer abschließenden Biegung zu unterziehen, wobei die Scheibe in Berührung mit den Formbahnen der Längsfertigformträger (23, 24) und in Berührung der Formbahnen der seitlichen Fertigformträger (25, 26) gebogen werden.

4. Verfahren nach dem vorhergehenden Anspruch, **dadurch gekennzeichnet, dass** sich im Laufe des Rohlingbiegens die Längsränder der Scheibe integral an die Formbahnen der Längsvorformträger anpassen.

5. Verfahren nach einem der vorhergehenden Verfahrensansprüche, **dadurch gekennzeichnet, dass** im Laufe des Rohlingbiegens die Seitenränder der Scheibe mindestens teilweise mit den Formbahnen der seitlichen Fertigformträger in Berührung treten.

6. Verfahren nach einem der vorhergehenden Verfahrensansprüche, **dadurch gekennzeichnet, dass** im Laufe des Rohlingbiegens die Mitten der Seitenränder der Scheibe nicht mit den Formbahnen der seitlichen Fertigformträger in Berührung treten.

7. Verfahren nach einem der vorhergehenden Verfahrensansprüche, **dadurch gekennzeichnet, dass** sich am Ende des Biegens die Ränder der Scheibe integral an die Formbahnen der Längsfertigformträger und die Formbahnen der seitlichen Fertigformträger anpassen.

8. Verfahren nach einem der vorhergehenden Verfahrensansprüche, **dadurch gekennzeichnet, dass** 4 bis 10 mm Glas an der Peripherie der Scheibe am Ende des Biegens nicht auf dem Fertigformrahmen gestützt werden.

9. Verfahren nach einem der vorhergehenden Verfahrensansprüche, **dadurch gekennzeichnet, dass** die Temperatur in der Mitte jedes der Seitenränder der Glasscheibe niedriger als 615 °C und sogar niedriger als 610 °C bleibt.

10. Verfahren nach einem der vorhergehenden Verfahrensansprüche, **dadurch gekennzeichnet, dass** am Ende des Biegens die seitliche Biegungstiefe zwischen 5 und 20 mm und im Allgemeinen zwischen 8 und 17 mm liegt.

11. Verfahren nach einem der vorhergehenden Verfahrensansprüche, **dadurch gekennzeichnet, dass** am Ende des Biegens die Längsbiegetiefe zwischen 40 und 150 mm liegt.

12. Verfahren nach einem der vorhergehenden Verfahrensansprüche, **dadurch gekennzeichnet, dass** das Verhältnis zwischen dem entstandenen Abstand zwischen den Mitten der Seitenränder der Scheibe und dem entstandenen Abstand zwischen den Mitten der Längsränder der Scheibe von 1,3 bis 2 reicht.

13. Verfahren nach einem der vorhergehenden Verfahrensansprüche, **dadurch gekennzeichnet, dass** mehrere übereinander liegende Glasscheiben, insbesondere zwei, gleichzeitig gebogen werden.

14. Herstellungsverfahren einer gebogenen Verglasung (1), das das Biegeverfahren nach einem der vorhergehenden Verfahrensansprüche umfasst, wobei die Verglasung zwei Seitenränder (4, 5) und zwei Längsränder (2, 3) und eine periphere Emailschicht umfasst, wobei die Verglasung eine seitliche Biegung und eine Längsbiegung umfasst, wobei die Emailschicht eine Breite kleiner als 15 mm auf den Seitenrändern und größer als 15 mm, ja sogar größer als 20 mm an den Längsrändern aufweist.

15. Verfahren nach dem vorhergehenden Anspruch, **dadurch gekennzeichnet, dass** die Verglasung Verbundglas ist.

16. Verfahren nach einem der zwei vorhergehenden Ansprüche, **dadurch gekennzeichnet, dass** die Verglasung eine Windschutzscheibe ist.

## Claims

1. A device (20) for the gravity-bending of a sheet of glass, comprising a longitudinal roughing mold comprising two longitudinal roughing supports (21, 22), and a finishing frame comprising two lateral finishing supports (25, 26) and two longitudinal finishing supports (23, 24), said supports forming shaping rails, the distance between the middles of the longitudinal finishing supports being shorter than the distance between the middles of the lateral finishing supports, the roughing mold or the finishing frame being able to be moved vertically one relative to the other during bending in order to switch from a rough-bending configuration to a final-bending configuration, **characterized in that**, in the rough-bending configuration, the shaping rails of the longitudinal roughing supports are higher up than the shaping rails of the longitudinal finishing supports, and **in that**, in the final-bending configuration, the shaping rails of the longitudinal finishing supports are higher up than the shaping rails of the longitudinal rough-molding supports, and **in that** the shaping rails of the lateral finishing supports are the only shaping rails under the lateral edges of the glass in the rough-bending configuration and in the final-bending configuration.

2. The device as claimed in the preceding claim, **characterized in that** the roughing mold is circumscribed by the finishing frame when viewed from above.

3. A method for the gravity-bending of a sheet of glass (40) at a deformation temperature using the device (20) of one of the preceding claims, the sheet of glass comprising two lateral edges (41, 42) and two longitudinal edges (43, 44), the distance between the middles of the longitudinal edges of the sheet being shorter than the distance between the middles of the lateral edges of the sheet, the sheet being supported by the device in the rough-bending configuration and, in order to undergo rough-bending, the longitudinal edges of the sheet being bent by contact with the shaping rails of the longitudinal roughing supports (21, 22), then the device switches to the final-bending configuration in order to make the sheet undergo a final bending, the sheet then being bent in contact with the shaping rails of the longitudinal finishing supports (23, 24) and in contact with the shaping rails of the lateral finishing supports (25, 26).

4. The method as claimed in the preceding claim, **characterized in that** during the rough bending, the longitudinal edges of the sheet fully follow the shaping rails of the longitudinal roughing supports.

5. The method as claimed in one of the preceding method claims, **characterized in that** during the rough bending, the lateral edges of the sheet come at least partially into contact with the shaping rails of the lateral finishing supports.

6. The method as claimed in one of the preceding method claims, **characterized in that** during the rough bending, the middles of the lateral edges of the sheet do not come into contact with the shaping rails of the lateral finishing supports.

7. The method as claimed in one of the preceding method claims, **characterized in that**, at the end of the bending, the edges of the sheet fully follow the shaping rails of the longitudinal finishing supports and the shaping rails of the lateral finishing supports.

8. The method as claimed in one of the preceding method claims, **characterized in that** 4 to 10 mm of glass at the periphery of the sheet are not supported on the finishing frame at the end of bending.

9. The method as claimed in one of the preceding method claims, **characterized in that** the temperature at the middle of each of the lateral edges of the sheet of glass remains below 615°C and even below 610°C.

10. The method as claimed in one of the preceding method claims, **characterized in that** at the end of bending, the depth of lateral bending is between 5 and 20 mm and generally between 8 and 17 mm.

11. The method as claimed in one of the preceding method claims, **characterized in that** at the end of bending, the depth of longitudinal bending is between 40 and 150 mm.

12. The method as claimed in one of the preceding method claims, **characterized in that** the ratio between the developed distance between the middles of the lateral edges of the sheet to the developed distance between the middles of the longitudinal edges of the sheet ranges from 1.3 to 2.

13. The method as claimed in one of the preceding method claims, **characterized in that** several, notably two, superposed sheets of glass are bent simultaneously.

14. A method of manufacturing of a curved glazing (1) comprising the process of either of preceding method claims, said glazing comprising two lateral edges (4, 5) and two longitudinal edges (2, 3) and a peripheral layer of enamel, said glazing comprising a lateral curving and a longitudinal curving, the layer of enamel being of a width less than 15 mm on the lateral edges and greater than 15 mm or even greater than 20 mm on the longitudinal edges.

15. The method as claimed in the preceding claim, **characterized in that** the glazing is laminated.

16. The method as claimed in one of the preceding glazing claims, **characterized in that** the glazing is a windshield.
